# EUROPÄISCHE PATENTANMELDUNG

(11) **EP 2 674 645 A1**
(43) Veröffentlichungstag der Anmeldung: **18.12.2013**
(21) Anmeldenummer: 12172105.4
(22) Anmeldetag: 15.06.2012
(51) Int. Cl.: F16J 15/16, F16H 57/04

(54) **Ölstauring**

(71) Anmelder: Siemens Aktiengesellschaft, 80333 München (DE)
(72) Erfinder: Fischer, Rocco, 09456 Annaberg-Buchholz (DE); Steubler, Thomas, 09385 Lugau /Erzgeb. (DE)

(57) **Zusammenfassung**

Die Erfindung betrifft einen Ölstauring (1) und ein Verfahren zu dessen Herstellung. Der Ölstauring (1) umfasst mindestens eine Umfangsfläche (2) und/oder Planfläche (3), welche durch spanendes Bearbeiten ausgebildet ist. Der Ölstauring (1) umfasst außerdem mindestens eine zur Ölführung vorgesehene Nut (41, 42, 43, 44), welche in einem unbearbeiteten Zustand belassen ist, der durch ein Urformen eines Rohteils (5) des Ölstaurings erzeugt wurde.

## Beschreibung

Die vorliegende Erfindung betrifft einen Ölstauring und ein Verfahren zu seiner Herstellung.

Ein Einstellen eines benötigten Ölstandes in einem Lager einer mittels einer Labyrinthdichtung abgedichteten Welle, welche z.B. aus einem Getriebegehäuse herausgeführt wird, kann mittels eines Ölstaurings erfolgen. Der Ölstauring sitzt in einer Lagerbohrung des Gehäuses. Das über radiale Bohrungen aus dem Ölstauring abfließende Öl wird über Bohrungen und Nuten im Getriebegehäuse abgeleitet.

Üblicherweise werden die Grundkörper von Ölstauringen gegossen. Zum Einstellen eines Ölstandes in dem Lager werden am Umfang des Ölstaurings mechanisch Bohrungen eingebracht. Ein Teil der zur Ölführung benötigten Komponenten wird spanend hergestellt.

Aufgabe der vorliegenden Erfindung ist es, einen verbesserten Ölstauring, ein Verfahren zu dessen Herstellung sowie ein Rohteil zur Herstellung eines Ölstaurings bereitzustellen.

Die Aufgabe wird erfindungsgemäß durch einen Ölstauring mit den in Anspruch 1 angegebenen Merkmalen gelöst. Der erfindungsgemäße Ölstauring umfasst mindestens eine Umfangsfläche und/oder Planfläche, welche durch spanendes Bearbeiten ausgebildet ist. Der Ölstauring umfasst außerdem mindestens eine zur Ölführung vorgesehene Nut, welche in einem unbearbeiteten Zustand, der durch ein Urformen des Ölstaurings erzeugt wurde, belassen ist.

Die Aufgabe wird erfindungsgemäß ebenfalls durch ein Verfahren mit den in Anspruch 9 angegebenen Merkmalen gelöst. Das erfindungsgemäße Verfahren zum Herstellen eines Ölstaurings umfasst folgende Schritte: Urformen eines Rohteils, welches mindestens eine zur Ölführung vorgesehene Nut aufweist; spanendes Bearbeiten des Rohteils an mindestens einer Umfangsfläche und/oder mindestens einer Planfläche zur Ausbildung eines Fertigteils mit vorgegebenen Durchmessern und Dicken; und Belassen der mindestens einen Nut in einem unbearbeiteten Zustand.

Unter Umfangsfläche wird eine gebogene Fläche verstanden, welche insbesondere radial um die Ringachse verläuft. Unter Planfläche wird eine ebene Fläche verstanden, welche insbesondere senkrecht zu der Ringachse verläuft.

Der Erfindung liegt die Erkenntnis zugrunde, dass durch ein Herstellen von funktionsrelevanten Komponenten des Ölstaurings außer Durchmesser und Planflächen bereits beim Urformen Arbeitsschritte bei der nachfolgenden, spanenden Bearbeitung des Ölstaurings entfallen können. Der geringere Fertigungsaufwand bei der mechanischen Bearbeitung, auch an angrenzenden Bauteilen, führt zu kürzeren Durchlauf- und Wiederbeschaffungszeiten, einem geringeren Fehlerpotential und geringeren Fertigungskosten, auch für angrenzende Bauteile wie z.B. Gehäuse. Somit ist durch die vorliegende Erfindung eine deutlich Einsparung von Arbeitszeit und Material erzielbar.

Vorteilhafte Ausgestaltungen und Weiterbildungen der Erfindung sind in den abhängigen Ansprüchen angegeben. Dabei kann das erfindungsgemäße Verfahren auch entsprechend den abhängigen Vorrichtungsansprüchen weitergebildet sein, und umgekehrt.

Gemäß einer bevorzugten Ausgestaltung der Erfindung wurde der unbearbeitete Zustand durch ein Gießen eines Rohteils des Ölstaurings erzeugt. Gemäß einer bevorzugten Ausgestaltung der Erfindung erfolgt das Urformen durch Gießen einer Schmelze in eine Gießform. Urformen des Ölstauring-Rohteils durch Gießen bietet den Vorteil, dass nach Bereitstellen einer Gießform eine große Anzahl identischer Werkstücke schnell und kostengünstig hergestellt werden können.

Gemäß einer bevorzugten Ausgestaltung der Erfindung umfasst die mindestens eine Nut eine oder mehrere folgender Nuten: Nut für einen Ölzulauf bei einer Druckschmierung, Nut für einen Ölzulauf bei einer drucklosen Schmierung, Nut für einen Ölablauf, Nut für einen Notüberlauf. Dies bietet den Vorteil, dass das Einstellen des Ölstandes in einer den Ölstauring aufnehmenden Lagerbohrung durch einen Ölstauring gewährleistet wird, der aus einem Gussrohteil hergestellt wird, in dem zur Ölführung benötigte Nuten bereits vorgegossen sind. Die eine oder mehreren Nuten für einen Ölablauf verlaufen vorzugsweise waagrecht und weisen eine Ölstaukante auf.

Gemäß einer bevorzugten Ausgestaltung der Erfindung umfasst die mindestens eine Nut eine Nut für einen Ölablauf, welche so ausgebildet ist, dass der Ölablauf parallel zu einer Achse einer in dem Ölstauring ausgebildeten Wellendurchführung erfolgen kann. Durch diese neue Ölführung sind bisher notwendige Bohr- und Fräsarbeiten am Gehäuse hinfällig.

Gemäß einer bevorzugten Ausgestaltung der Erfindung ist die mindestens eine Nut so ausgebildet, dass ein Zulauf und/oder Ablauf von Öl ausschließlich über einen Lagerdeckel eines Gehäuses erfolgen kann, welcher den Ölstauring zum Gehäuseaußenraum hin abdeckt, wenn sich der Ölstauring in einer in einem Gehäuse montierten Position befindet. Durch diese neue Ölführung sind bisher notwendige Bohr- und Fräsarbeiten am Gehäuse hinfällig.

Gemäß einer bevorzugten Ausgestaltung der Erfindung umfasst die mindestens eine zur Ölführung vorgesehene Nut zwei oder mehr Nuten, die symmetrisch zu einer Symmetrieebene angeordnet sind. Durch eine symmetrische Anordnung von Nuten können mit demselben Ölstauring verschiedene Getriebeausführungen realisiert werden.

Gemäß einer bevorzugten Ausgestaltung der Erfindung sind eine oder mehrere Nuten der mindestens einen Nut eine Nut für einen Ölzulauf bei druckloser Schmierung und/oder eine Nut mit Ölstaukante für einen Ölablauf, wobei diese ein oder mehrere Nuten, parallel zu einer Achse einer in dem Ölstauring ausgebildeten Wellendurchführung gesehen, mit korrespondierenden Nuten für den Ölzu- bzw. Ölablauf eines Lagerdeckels des Gehäuses überlappen, welcher den Ölstauring zum Gehäuseaußenraum hin abdeckt, wenn sich der Ölstauring in einer in einem Gehäuse montierten Position befindet. Auf diese Weise wird die Synergie zwischen dem Ölstauring und dem angrenzenden Lagerdeckel genutzt.

Gemäß einer bevorzugten Ausgestaltung der Erfindung erfolgt das spanende Bearbeiten durch Drehen und/oder Fräsen. Diese Spanverfahren erlauben eine schnelle und genaue Bearbeitung der Rohteile.

Die Aufgabe wird erfindungsgemäß außerdem durch ein Rohteil zum Herstellen eines Ölstaurings gelöst, wobei das Rohteil durch Urformen, vorzugsweise Gießen, ausgebildet ist und mindestens eine zur Ölführung vorgesehene Nut aufweist, welche durch das besagte Urformen ausgebildet ist. Das Rohteil dient als ein Ausgangsprodukt, aus welchem durch einen Materialabtrag, mittels einer spanenden Bearbeitung, an mindestens einer Umfangsfläche und/oder mindestens einer Planfläche ein Ölstauring gefertigt werden kann. Vorzugsweise werden bei der Bearbeitung des Rohteils die bereits im Rohteil ausgebildeten Ölführungsnuten nicht bearbeitet, sondern sie bleiben in einem unbearbeiteten Zustand, wie er sich durch das Urformen ergibt.

Im Folgenden wird die Erfindung anhand mehrerer Ausführungsbeispiele unter Zuhilfenahme der beiliegenden Zeichnung erläutert. Es zeigen jeweils schematisch und nicht maßstabsgetreu
- Fig. 1 und 2: die bei einer Anordnung in einer Lagerbohrung dem Gehäuseinneren zugewandte Seite eines fertigen Ölstaurings (Fig. 2) und dieselbe Seite eines entsprechenden Rohteils (Fig. 1), jeweils in Schrägansicht;
- Fig. 3 und 4: die bei einer Anordnung in einer Lagerbohrung dem Lagerdeckel zugewandte Seite des in Fig. 2 dargestellten fertigen Ölstaurings (Fig. 4) und dieselbe Seite des entsprechenden Rohteils (Fig. 3), jeweils in Schrägansicht;
- Fig. 5: eine Frontalansicht der bei einer Anordnung in einer Lagerbohrung dem Gehäuseinneren zugewandten Seite des in den Fig. 2 und 4 dargestellten Ölstaurings;
- Fig. 6 und 7: zwei Schnitte VI, VII des in Fig. 5 gezeigten Ölstaurings;
- Fig. 8: eine Ansicht eines Ölstaurings in einer Einbauposition in einem Gehäuse mit abgenommenem Lagerdeckel; und
- Fig. 9: einen Schnitt IX des in Fig. 8 gezeigten Gehäuses.

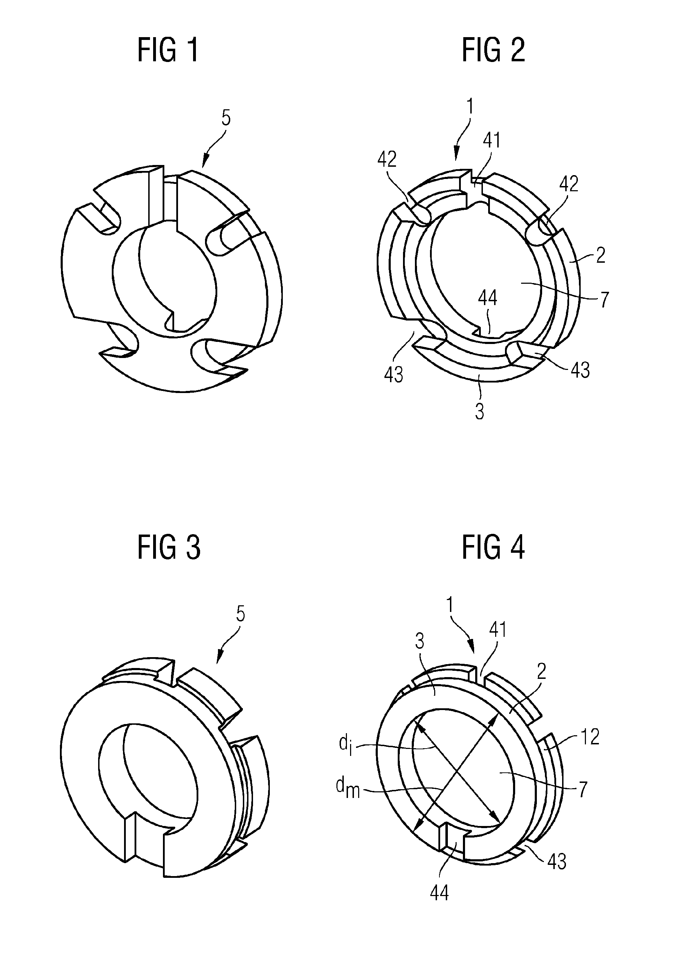

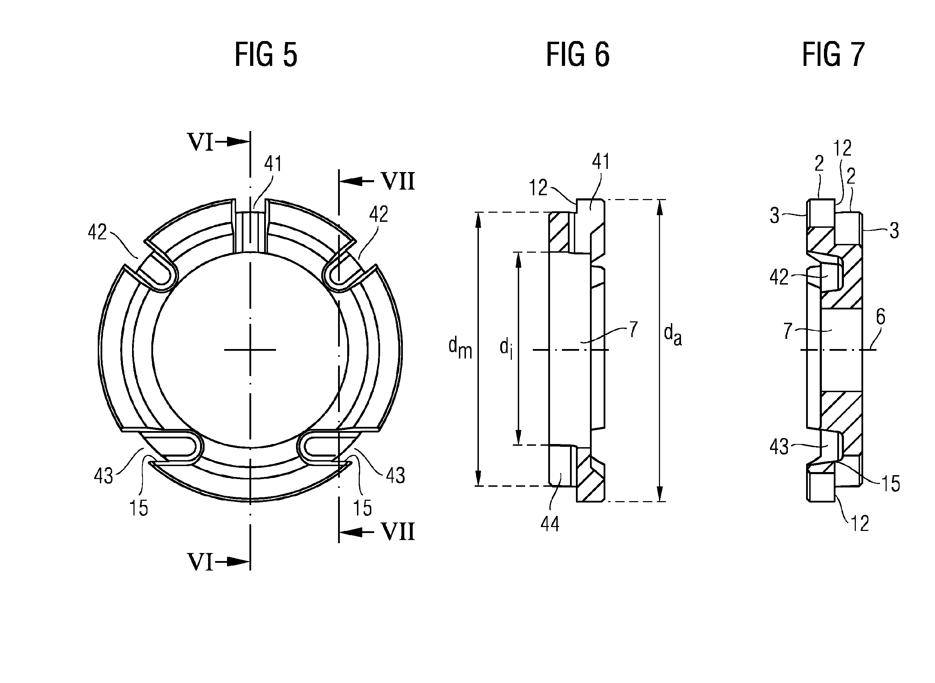

Der in den Fig. 1 bis 7 dargestellte Ölstauring 1 ist zur Anordnung in einer Lagerbohrung eines mit einem flüssigen Schmierstoff wie Öl geschmierten Lagers vorgesehen. Der Ölstauring 1 ist z. B. zum Einsatz in einem Getriebe, einem Motor oder einer Maschine geeignet, die ein mit Öl geschmiertes Wellenlager aufweisen.

Der Ölstauring 1 weist Umfangsflächen 2 und Planflächen 3, 12 auf, welche durch eine spanende Bearbeitung ausgebildet sind. Eine erste Planfläche 3 auf der einem Lagerdeckel zugewandten Seite bildet einen konzentrisch um eine Rotationsachse 6 des Ölstaurings 1 verlaufenden, geschlitzten Ring mit einem inneren Ringdurchmesser dᵢ und einem äußeren Ringdurchmesser dₘ. Dabei entspricht der innere Ringdurchmesser dᵢ dem Durchmesser der kreisförmigen Ringöffnung 7 des Ölstaurings 1. Die Ringöffnung 7 dient der Durchführung einer Welle. Damit zwischen dem Ölstauring 1 und einer den Ölstauring 1 durchdringenden Welle ein ringförmiger Luftspalt ausgebildet wird, ist der innere Ringdurchmesser dᵢ geringfügig größer als ein Außendurchmesser der Welle. Der Ölstauring 1 wird mit seinem Außendurchmesser dₐ in eine Lagerbohrung des Getriebegehäuses eingesetzt, während der Ölstauring 1 mit dem äußeren Ringdurchmesser dₘ in einen Lagerdeckel des Getriebegehäuses eingesetzt wird.

Eine zweite Planfläche 12 auf der einem Lagerdeckel zugewandten Seite, die zwischen dem äußeren Ringdurchmesser dₘ und dem Außendurchmesser dₐ des Ölstaurings 1 ausgebildet ist, überträgt Lagerkräfte auf den Lagerdeckel. Durch eine die erste und zweite Planfläche 3, 12 verbindende Umfangsfläche 2 wird eine Zentrierung des Ölstaurings 1 beim Einsetzen in eine Getriebegehäuse erleichtert.

Der Ölstauring 1 weist außerdem zur Ölführung vorgesehenen Nuten 41, 42, 43, 44 auf, welche in einem unbearbeiteten Zustand belassen sind, der durch ein Urformen des Rohbauteils 5 des Ölstaurings erzeugt wurde.

Der Ölstauring 1 weist eine Nut 41 für einen Ölzulauf bei Druckschmierung, zwei Nuten 42 für einen Ölzulauf bei druckloser Schmierung, zwei Nuten 43 für einen Ölablauf und eine Nut 44 für einen Notüberlauf auf. Die doppelt vorhandenen Nuten 42, 43 sind symmetrisch angeordnet, um verschiedene Getriebeausführungen realisieren zu können. Dies ermöglicht die Herstellung verschiedener Fertigteile aus demselben Rohteil.

Die Position der Ölstaukanten 15 der waagrechten Nuten 43 wird so gewählt, dass ein Ölstauring 1 für zwei oder mehr erforderliche Ölstände, ggf. bedingt durch verschiedene Wellenlager, verwendet werden kann. Dies verringert die Teilevielfalt und somit auch die Lagerhaltungskosten.

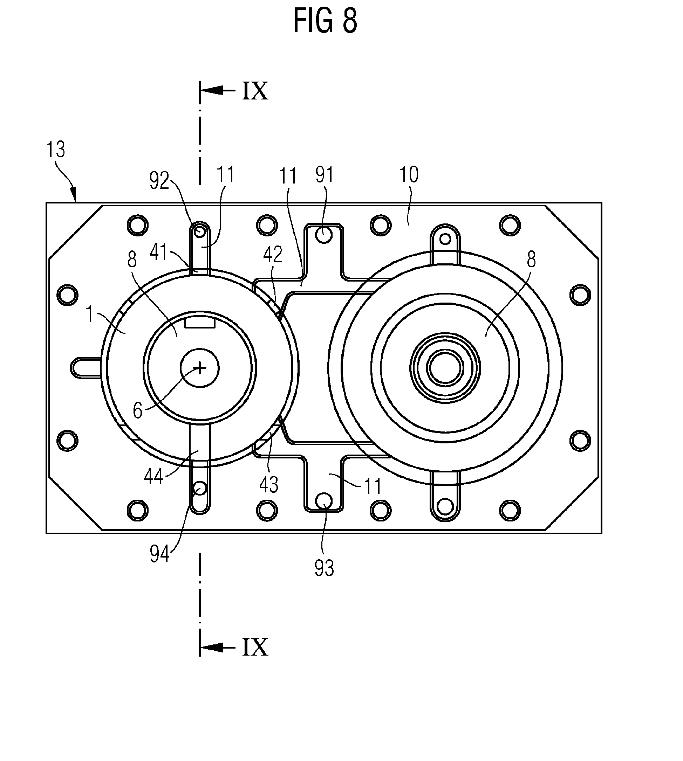

Fig. 8 zeigt eine Ansicht eines Ölstaurings 1 in einer Einbauposition in einer Wand 13 eines Getriebegehäuses. Um das Zusammenwirken von Ölstauring 1 und Ölzu- und -abführung darzustellen, sind der Ansicht des Ölstaurings 1 die Konturen eines Lagerdeckels 10 überlagert, welcher bei einer Montage an der Gehäusewand 13 den Ölstauring 1 abdeckt. Durch die Wellendurchführung des Ölstaurings 1 ist eine Welle 8 geführt, die mittels einer Labyrinthdichtung gegenüber der Getriebeumgebung abgedichtet ist. Der die Welle 8 umgebende Ölstauring 1 sitzt in einer Lagerbohrung, die in einer Wand 13 des Getriebegehäuses angebracht ist. Die Gehäusewand 13 weist eine Bohrung 91 auf, durch welche Öl bei druckloser Schmierung aus dem Inneren des Getriebegehäuses in eine Zufluss-Nut 11 geleitet wird, die auf einer Innenseite des Lagerdeckels 10 eingegossen ist. Von dort fließt das Öl unter dem Einfluss der Schwerkraft zu einer Nut 42 des Ölstaurings 1, welche für eine drucklose Schmierung vorgesehen ist, und fließt von dort über diese Nut 42 zur Lagerbohrung, wo es der Schmierung des Wellenlagers dient.

Überschüssiges Öl in der Lagerbohrung fließt über den Ölüberlauf 43 aus der Lagerbohrung in eine Abfluss-Nut 11, welche auf einer Innenseite des Lagerdeckels 10 eingegossen ist. Von dort wird das Öl durch die Nut 11 zu einer weiteren Bohrung 93 in der Gehäusewand 13 geleitet, durch welche das Öl zurück in das Inneren des Getriebegehäuses fließt. Von dort gelangt das Öl über eine Tauchschmierung rotierender verzahnter Teile zu einem Ölauffangbehälter, von wo das Öl in die Zufluss-Nut 11 gelangt. Auf diese Weise sind ein geschlossener Ölkreislauf und eine verlässliche Schmierung der Wellenlager gewährleistet.

Die Gehäusewand weist eine weitere Bohrung 92 auf, über die bei Druckschmierung Öl über eine Nut 11 zu der Nut 41 für Druckschmierung des Ölstaurings 1 gelangen kann. Außerdem ist unterhalb der Nut 44 für den Notüberlauf des Ölstaurings 1 eine Ablaufbohrung 94 in der Gehäusewand vorgesehen.

Die Nuten 41 bis 44 in dem Ölstauring 1 überlappen, parallel zu einer Achse einer in dem Ölstauring 1 ausgebildeten Wellendurchführung gesehen, mit den korrespondierenden Nuten 11 für den Ölzu- bzw. Ölablauf des Lagerdeckels 10 des Gehäuses, welcher den Ölstauring 1 zum Gehäuseaußenraum hin abdeckt. Dabei fällt die Wellenachse 6 mit der Ringachse des Ölstaurings 1 zusammen.

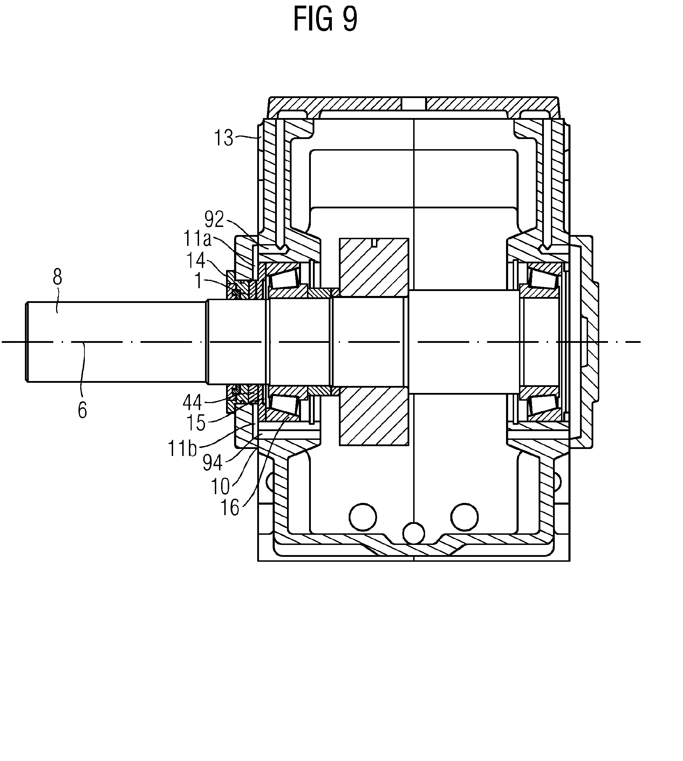

Fig. 9 zeigt einen Schnitt IX entlang der Ringachse 6 eines Ölstaurings 1, der in einer Lagerbohrung eines Getriebegehäuses 13 sitzt und von einem Lagerdeckel 10 bedeckt ist. Eine durch eine Gehäusewand 13 geführte Welle 8 ist durch eine Labyrinthdichtung abgedichtet, die in eine in dem Lagerdeckel 10 fixierten Aufnahmebuchse 14 eingelegt ist.

Das Getriebegehäuse 13 weist Bohrungen 92, 94 auf zur Zufuhr und Abfuhr von Öl zu einem Wellenlager 16, in dem eine Welle 1 gelagert ist. Das aus dem Gehäuseinneren über eine Bohrung 92 zum Ölzulauf für Druckschmierung zugeführte Öl fließt in einer in dem Lagerdeckel 10 ausgebildeten Nut 11a für Druckschmierung zu der Lagerbohrung. Dort wird das Schmieröl durch den Ölstauring 1 bis zu einer Ölstaukante 15 aufgestaut.

In dem Schnitt ist ebenfalls eine Nut 44 des Ölstaurings 1 für einen Notüberlauf zu erkennen, aus der das Öl über eine im Lagerdeckel 10 ausgebildete Nut 11b für einen Notüberlauf zu einer Bohrung 94 im Getriebegehäuse fließt. Über diese Bohrung 94 gelangt das Öl wieder zurück in das Gehäuseinnere. Die Bohrung 94 hat eine weitere Funktion: bei normaler Tauchschmierung dient sie einem Druckausgleich und/oder einer Ölumwälzung, wenn das Lager Öl in Richtung Lagerdeckel fördert. Tauchschmierung bedeutet, dass der Ölstand im Getriebegehäuse so hoch ist, dass wenigstens ein Lager, vorzugsweise alle Lager, und wenigstens ein verzahntes Teil, vorzugsweise alle verzahnten Teile, in Öl eintauchen und Wellenumfangsflächen mit Kontakt zu Wellendichtringen vom stehenden Öl berührt werden.

Obwohl die Erfindung im Detail durch die bevorzugten Ausführungsbeispiele näher illustriert und beschrieben wurde, so ist die Erfindung nicht durch die offenbarten Beispiele eingeschränkt, und andere Variationen können vom Fachmann hieraus abgeleitet werden, ohne den Schutzumfang der Erfindung zu verlassen.

## Patentansprüche

1. Ölstauring (1) mit
- mindestens einer Umfangsfläche (2) und/oder Planfläche (3, 12), welche durch spanendes Bearbeiten ausgebildet ist, und
- mindestens einer zur Ölführung vorgesehenen Nut (41, 42, 43, 44), welche in einem unbearbeiteten Zustand belassen ist, der durch ein Urformen des Ölstaurings (1) erzeugt wurde.

2. Ölstauring (1) nach Anspruch 1, wobei der unbearbeitete Zustand durch ein Gießen eines Rohteils (5) des Ölstaurings (1) erzeugt wurde.

3. Ölstauring (1) nach Anspruch 1 oder 2,
wobei die mindestens eine Nut (41, 42, 43, 44) eine oder mehrere folgender Nuten umfasst: Nut (41) für einen Ölzulauf bei Druckschmierung, Nut (42) für einen Ölzulauf bei druckloser Schmierung, Nut (43) für einen Ölablauf, Nut (44) für einen Notüberlauf.

4. Ölstauring (1) nach einem der Ansprüche 1 bis 3,
wobei die mindestens eine Nut (41, 42, 43, 44) eine Nut (43) für einen Ölablauf umfasst, welche so ausgebildet ist, dass der Ölablauf parallel zu einer Achse (6) einer in dem Ölstauring ausgebildeten Wellendurchführung (7) erfolgen kann.

5. Ölstauring (1) nach einem der Ansprüche 1 bis 4,
wobei die mindestens eine Nut (41, 42, 43, 44) so ausgebildet ist, dass ein Zu- und/oder Ablauf von Öl ausschließlich über einen Lagerdeckel (10) eines Gehäuses erfolgen kann, welcher den Ölstauring zum Gehäuseaußenraum hin abdeckt, wenn sich der Ölstauring in einer in einem Gehäuse montierten Position befindet.

6. Ölstauring (1) nach einem der Ansprüche 1 bis 5,
wobei die mindestens eine zur Ölführung vorgesehene Nut (41, 42, 43, 44) zwei oder mehr Nuten umfasst, die symmetrisch zu einer Symmetrieebene angeordnet sind.

7. Ölstauring nach einem der Ansprüche 1 bis 6,
wobei ein oder mehrere Nuten der mindestens einen Nut eine Nut (42) für einen Ölzulauf bei druckloser Schmierung und/oder eine Nut (43) mit Ölstaukante für einen Ölablauf ist, wobei diese ein oder mehrere Nuten, parallel zu einer Achse (6) einer in dem Ölstauring ausgebildeten Wellendurchführung (7) gesehen, mit korrespondierenden Nuten (11) für den Ölzu- bzw. Ölablauf eines Lagerdeckels (10) des Gehäuses überlappen, welcher den Ölstauring (1) zum Gehäuseaußenraum hin abdeckt, wenn sich der Ölstauring (1) in einer in einem Gehäuse montierten Position befindet.

8. Getriebe oder Maschine mit einem Ölstauring (1) nach einem der vorhergehenden Ansprüche.

9. Verfahren zum Herstellen eines Ölstaurings nach einem der Ansprüche 1 bis 7, mit folgenden Schritten:
- Urformen eines Rohteils (5), welches mindestens eine zur Ölführung vorgesehene Nut (41, 42, 43, 44) aufweist;
- spanendes Bearbeiten des Rohteils (5) an mindestens einer Umfangsfläche (2) und/oder mindestens einer Planfläche (3, 12) zur Ausbildung eines Fertigteils (1) mit vorgegebenen Durchmessern (dᵢ, dₘ, dₐ) und Planflächen (3, 12); und
- Belassen der mindestens einen Nut (41, 42, 43, 44) in einem unbearbeiteten Zustand.

10. Verfahren nach Anspruch 9, wobei das Urformen durch Gießen einer Schmelze in eine Gießform erfolgt.

11. Verfahren nach Anspruch 9 oder 10, wobei das spanende Bearbeiten durch Drehen und/oder Fräsen erfolgt.

12. Rohteil (5) zum Herstellen eines Ölstaurings (1) nach einem der Ansprüche 1 bis 7, wobei das Rohteil (5) durch Urformen, vorzugsweise Gießen, ausgebildet ist und mindestens eine zur Ölführung vorgesehene Nut (41, 42, 43, 44) aufweist, welche durch das besagte Urformen ausgebildet ist.
